# EUROPÄISCHE PATENTSCHRIFT

(11) **EP 1 387 742 B1**
(45) Veröffentlichungstag und Bekanntmachung des Hinweises auf die Patenterteilung: **13.10.2004**
(21) Anmeldenummer: 02745081.6
(22) Anmeldetag: 17.05.2002
(51) Int. Cl.: B27B 1/00, B27B 31/06, B23D 59/00

(54) **SÄGEGUTHANDHABUNGSVORRICHTUNG**
HANDLING ARRANGEMENT FOR SAWING ITEMS
SYSTEME DE MANUTENTION D'ARTICLES DE SCIAGE

(30) Priorität: 17.05.2001 DE 20108813 U
(43) Veröffentlichungstag der Anmeldung: 11.02.2004
(73) Patentinhaber: Raimann Holzoptimierung GmbH & Co. KG, 79108 Freiburg (DE)
(72) Erfinder: COURTOIS, Guy, 79108 Freiburg (DE); JÄGER, Werner, 79365 Rheinhausen (DE); SCHOPP, Klaus, 79112 Freiburg (DE); WURTH, Bernhard, 77966 Kappel-Grafenhausen (DE)
(74) Vertreter: Gross, Felix, Dr.
(86) Internationale Anmeldenummer: PCT/DE2002/001893
(87) Internationale Veröffentlichungsnummer: WO 2002/092297

(56) Entgegenhaltungen:
- EP-A- 0 145 683
- DE-A- 3 517 714
- DE-A- 4 027 274
- US-A- 4 541 722
- US-A- 4 803 371
- US-A- 4 879 659
- US-A- 5 414 268

## Beschreibung

Die Erfindung betrifft eine Sägeguthandhabungsvorrichtung nach dem Oberbegriff des Anspruchs 1.

Die Beschickung von Holzsägen mit Sägegut ist ein Problem, da das Sägegut als Naturprodukt unregelmäßig geformt ist und daher eine Ausrichtung auf eine Sägevorrichtung schwierig ist.

Daher sind bei herkömmlicher Bearbeitungsweise an der Säge ein bis zwei Bediener im Einsatz, die das zu schneidende Sägegut hinsichtlich der Krümmung beurteilen, der Sägevorrichtung zuführen sowie die geschnittenen Leisten abnehmen und stapeln.

Das Eingangs-Sägegut besteht bei den hier betrachteten Sägevorrichtungen z.B. aus besäumten oder unbesäumten Massivholzbrettern, wobei grundsätzlich alle Sägegüter aus dem Bereich des Massivholzzuschnitts verwendet werden.

Der vorliegenden Erfindung liegt die Aufgabe zugrunde, eine Vorrichtung zu schaffen, mit der die Handhabung des Sägegutes vereinfacht wird.

Diese Aufgabe wird erfindungsgemäß durch eine Sägeguthandhabungsvorrichtung mit den Merkmalen des Anspruchs 1 gelöst.

Durch die Verwendung eines Mittels zur automatischen räumlichen Ausrichtung mindestens eines Sägegutes, insbesondere von Brettware, auf eine Sägevorrichtung wird die Verarbeitung des Sägegutes erheblich vereinfacht und beschleunigt. Damit lassen sich z.B. unbesäumte Bretter automatisch auf die Nulllinie einer Sägevorrichtung ausrichten.

In einer vorteilhaften Ausführung der Sägeguthandhabungsvorrichtung ist diese Nullünie automatisch ermittelbar. Um komplizierte Führungswege des Sägegutes zu vermeiden, wird die Nulllinie des Sägegutes in Übereinstimmung mit der Nulllinie des zugeordneten Kreissägeblattes gebracht.

Es ist von Vorteil, neben der Nulllinie des Sägegutes auch dessen äußere Kontur, wie z. B. die Waldkante oder andere Krümmungen und/oder Unebenheiten automatisch zu erfassen.

Für die Erfassung derartiger Unebenheiten ist eine Vorrichtung zur Entfernungsmessung besonders geeignet, mit der von einem definierten Punkt aus der jeweilige Abstand von der Vorrichtung zum Sägegut ermittelt wird. Derartige Messungen können jedoch ebenfalls mittels Lichtschranken vorgenommen werden. Die Ermittlung der Konturen erfolgt hierbei in Abhängigkeit von den jeweils durch das Sägegut durchlaufenen Sensoren der Lichtschranken. Besonders genaue Messergebnisse erhält man bei Kombination beider Vorrichtungen.

Eine bevorzugte Ausführungsform der Vorrichtung zur Entfernungsmessung ist eine Laserentfernungsmessvorrichtung, die besonders genaue Messergebnisse liefert.

Es ist zur genauen Positionierung des Sägegutes von Vorteil, neben den Unebenheiten einer Kante des Sägegutes in horizontaler Richtung auch deren Unebenheiten in vertikaler Richtung zu ermitteln. Damit ist ein sehr genaues Abbild der Kontur des Sägegutes erstellbar. Derartige Messungen werden bevorzugt mit der Laserentfemungsmessvorrichtung vorgenommen.

Zum schnelleren Erfassen der Form des Sägegutes ist es vorteilhaft, mehrere Vorrichtungen zur Entfernungsmessung zu verwenden.

Mit Blick auf die Verarbeitung der Messdaten aus der Entfernungsmessung ist es vorteilhaft, zur Datenerfassung an mindestens einem Messdatenerfassungsbereich eine Kamera oder einen Laserscanner oder beides kombiniert einzusetzen.

Die Kamera ist dabei bevorzugt über dem Sägegut angeordnet. Da die Stapelhöhe des Sägegutes produktionsbedingt flexibel ist, ist die Kamera in Bezug auf das Sägegut automatisch in der Höhe verstellbar. Der Abstand zwischen Kamera und Sägegut ist somit konstant. Somit wird die Entstehung von Zerrbildern in der Kamera vermieden.

Zur Aufbereitung der Messdaten ist es von Vorteil, die Kamera mit einer Datenverarbeitungsvorrichtung zu koppeln, in der beispielsweise die Brettkrümmung und/oder die Nulllinie des Sägegutes berechnet werden können.

Werden die Messdaten mittels Kamera und Laserscanner ermittelt, ist es sinnvoll, den Laserscanner quer zur Haupterstreckungsrichtung des Sägegutes anzuordnen. Die Lichtlinien des Scanners werfen somit eine Art Lichtgitter quer zu den Brettern bzw. zum Stapel des Sägegutes.

Die Messwerte, die durch Abtastung dieses Lichtgitters durch die Kamera ermittelt werden, stellen die Grundlage für die Berechnung der Kontur des Sägegutes dar. Die in der Datenverarbeitungsvorrichtung berechneten Konturdaten werden bevorzugt in einem Speicher abgelegt. Sie können dort durch andere Baugruppen der Handhabungsvorrichtung abgerufen werden.

Um den Sägeabfall so klein wie möglich zu halten, wird das Sägegut nach Berechnung seiner Nulllinie durch ein Ausrichtungsmittel bevorzugt automatisch auf die Nulllinie des Sägegutes ausgerichtet.

Besonders vorteilhaft ist hierfür der Einsatz eines Roboters mit einem Greifer zur Aufnahme des Sägegutes, der seinen Greifer in Abhängigkeit von den im Speicher hinterlegten Daten positioniert.

In dieser Anordnung ist ein sehr schneller Produktionsablauf gewährleistet.

Weitere vorteilhafte Ausgestaltungen dieser Erfindung sind in den Unteransprüchen dargestellt.

Die Erfindung wird nachfolgend unter Bezugnahme auf die Figuren der Zeichnungen an einem Ausführungsbeispiel näher erläutert. Es zeigen:
- Fig. 1: eine Prinzipskizze der Funktionsweise einer erfindungsgemäßen Ausführungsform;
- Fig. 2: eine schematische Draufsicht auf eine erfindungsgemäße Ausführungsform.

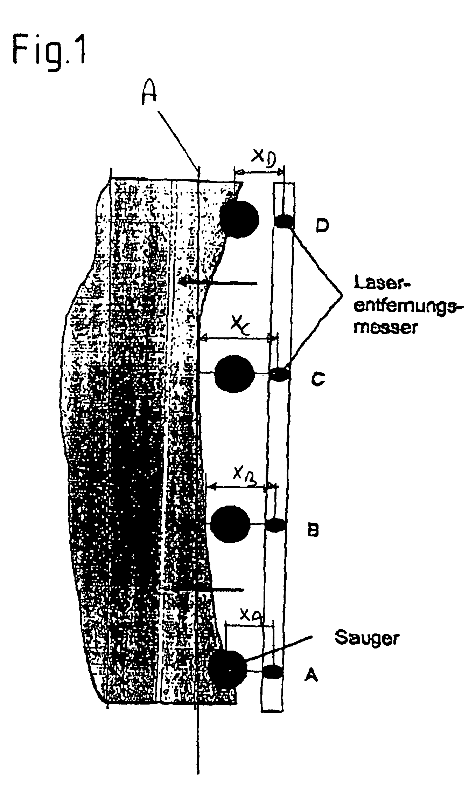

In Fig. 1 wird links ein unbesäumtes Holzteil mit einer Waldkante als Sägegut dargestellt. Diese Sägegut soll mit einer hier nicht dargestellten Sägevorrichtung in einzelne Leisten aufgetrennt werden. Alternativ können auch unbesäumte Bretter bearbeitet werden, die z.B. nach dem Trocken gekrümmt sind.

Vakuumsauger, hier als große Kreise dargestellt, sorgen für die Halterung des Sägegutes. Da die Oberfläche des Sägegutes uneben ist, müssen die Sauger hinreichend elastisch sein und sich auch automatisch dreidimensional ausrichten lassen. Alternativ sind auch andere Mittel zum Halten und Positionieren des Sägeguts möglich, wie z.B. mechanische Vorrichtungen.

Rechts sind in Fig. 1 vier Laserentfemungsmesser A, B, C, D dargestellt, die auf einem Greifer eines Roboters angeordnet sind. Diese Laserentfemungsmesser können die Lage der Waldkante auf unterschiedliche Weise erfassen.

In einer ersten Variante werden die seitlichen Abstände x_{A}, x_{B}, x_{C}, x_{D} zu der Waldkante des Sägegutes gemessen. Durch die Abstandsmessungen wird die komplexe Form der Waldkante durch ein Polygonzug erfasst. Die Tangente an diesen Polygonzug würde dann die Nulllinie des Sägegutes darstellen. Auch kann ein Sicherheitszuschlag für die Wahl der Nulllinie verwendet werden, da der Polygonzug die Waldkante nur unvollständig abbilden kann.

In Abhängigkeit von diesen Entfernungsmessungen sorgt ein Mittel zur automatischen räumlichen Ausrichtung mindestens eines Sägegutes, insbesondere von Brettware, dafür, dass das Sägegut auf ein Sägeblatt ausgerichtet wird. Dabei sorgt ein Ausrichtungsmittel (z.B. ein computergesteuerter Greifer) dafür, das die Schnittlinie A des Sägeblattes so gewählt wird, dass ein minimaler Sägeabfall erzeugt wird. Der Sägeabfall im dargestellten Fall liegt rechts von der Schnittlinie A.

Die Ausrichtung des Sägegutes geschieht vollautomatisch durch einen hier nicht dargestellten computergesteuerten ersten Roboter.

In einer zweiten Alternative wird der Greifer mit den Lasereritfemungsmessem in Richtung der Pfeile auf das Sägegut bewegt und die Laserentfernungsmesser sind vertikal auf das Sägegut gerichtet. Sobald er Kontakt mit der Waldkante aufgenommen hat (z.B. durch den Laserentfemungsmesser A) dreht sich der Greifer um diesen Punkt, bis ein zweiter Laserstrahl Kontakt mit dem Sägegut hat (z.B. durch Laserentfemungsmesser D). Sobald dies der Fall ist, fährt der Greifer parallel zu der so definierten Linie über das Sägegut, bis alle verbleibenden Laserentfernungsmesser Kontakt mit dem Sägegut haben. Die Laserentfernungsmesser fungieren hier in Art von Lichtschranken.

In einer dritten Alternative werden die Laserentfemungsmesser ebenfalls in Art einer Lichtschranke verwendet. Der Greifer mit den Laserentfemungsmessem wird in Richtung der Pfeile auf das Sägegut geführt. Sobald alle Laserentfemungsmesser Kontakt mit dem Sägegut haben, ist die Nulllinie ermittelt.

Durch den Einsatz von Robotern kann z.B. eine Sägevorrichtung wie eine Vielblattsäge ohne Personaleinsatz betrieben werden.

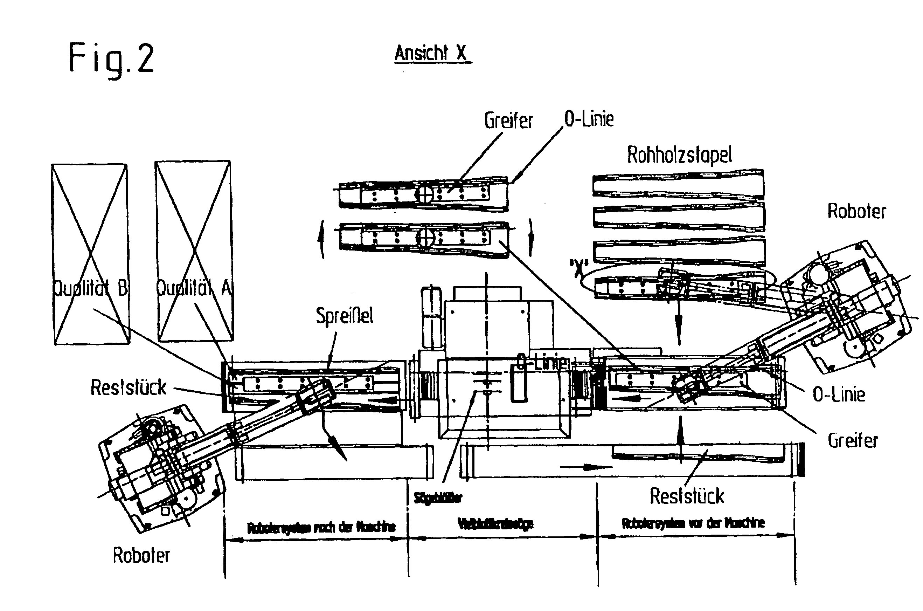

Dies ist in Fig. 2 dargestellt. Fig. 2 gibt einen Überblick über eine vollautomatische Handhabungsstation für eine Holzbearbeitung.

Der vor der Sägevorrichtung angeordneter erste Roboter (in Fig. 2 rechts) ist mittels eines speziellen Greifers in der Lage, besäumte oder unbesäumte Bretter auf einem bereitgestellten Rohholzstapel zu erkennen, die Krümmung der Kante zu erfassen und die gemäß der ermittelten Werte entlang der Nulllinie der Sägevorrichtung (z.B. Vielkreissäge) auszurichten. Mögliche Alternativen waren oben beschrieben worden.

Die Erkennung der Kante und der Krümmung des Sägegutes (z.B. Brett) erfolgt dabei wie oben beschrieben über mehrere Laserentfemungsmesser A, B, C, D wobei die Reihenfolge und der Kontaktzeitpunkt mit der Oberkante des jeweiligen Brettes zur Berechnung der Krümmung genutzt werden. Hierzu wird der Greifer von der Seite des Brettes angenähert (in Fig. 1 durch nach links gerichtete Pfeile symbolisiert) nach der es später an der Nulllinie der Sägevorrichtung ausgerichtet wird.

Durch Drehung des Greifers wird das Sägegut nach einer Alternative dann so vor der Sägevorrichtung positioniert, dass die Waldkante, oder die gekrümmte Kante bereits besäumter Bretter mit minimalem Verlust abgetrennt wird. Dies ist in Fig. 2 als Ansicht X im Detail dargestellt. Die Detailansicht zeigt den Greifer mit den Laserentfemungsmessern und die Nulllinie des Sägegutes. Es ist diese Nulllinie die dann nach dem Abheben vom Rohholzstapel auf die Nulllinie des Sägeblattes ausgerichtet wird.

Durch ein Einzugtransportsystem wird das Sägegut dann zur Sägevorrichtung transportiert. Falls Stapelleisten zwischen den einzelnen Brettlagen vorhanden sind, werden diese ebenfalls vom ersten Roboter automatisch mittels Bürsten entfernt. Die Bürsten in den Greifern des Roboters integriert.

Der gesamte Ablauf erfolgt ohne menschliche Intervention und ohne vorheriges Entstapeln bzw. eine Vereinzelung der Brettware. Die erzielte Genauigkeit bei der Ausrichtung liegt bei ca. 0.5mm.

Ein zweiter Roboter, der in Fig. 2 links dargestellt ist, ist hinter der Sägevorrichtung angeordnet. Dieser zweite Roboter soll die geschnitten Leisten abnehmen und z.B. in Abhängigkeit ihrer. Breite unterschiedlichen Stapelpositionen zuführen. Lichttaster, die ausgangsseitig an der Sägevorrichtung angeordnet sind, erfassen die Breite und Anzahl der geschnittenen Leisten.

Über ein in der Sägevorrichtung integriertes Meßsystem erfolgt, unabhängig vom Roboter, die Entsorgung des Spreißels (d.h. der Waldkante).

Entspricht die geschnittene Breite der Leisten einem vorgegebenen Kriterium, so werden die Leisten automatisch zur Weiterverarbeitung dem nächsten Produktionsschritt übergeben. Leisten, die schmaler sind, aber immer noch oberhalb eine Mindestbreite liegen, werden separat abgestapelt und könnten anderweitig weiterverarbeitet werden.

Leisten, deren Breite unterhalb der Mindestbreite liegen, die Waldkante und / oder der Sägeabfall von gekrümmten Brettern rutschen über einen klappbaren Tisch direkt in die Zuführung eines Scherautomaten. Ist das verbliebene Sägegut aber breiter als der Sägebereich des Scherautomaten, so schiebt, der zweite Roboter dieses Reststück automatisch auf ein Rücktransportband, das es an eine definierte Position vor der Sägevorrichtung transportiert, wo ein Sensor die Ankunft des Reststückes meldet. Es wird dann erneut der Sägevorrichtung zugeführt, wobei sich dieser Prozess wiederholen kann, bis das gesamte Brett aufgeteilt ist.

Zur Verbesserung der Bedienung sind die Roboter durch ein Spracherkennungssystem steuerbar. So kann ein Bediener den zweiten Roboter anweisen, eine geschnittene Leiste auf einen Stapel der Qualität A oder B zu legen. Auch kann er den zweiten Roboter anweisen, Leisten einer bestimmten Breite einer Folgemaschine zuzuleiten. Ferner ist es möglich, dass er Anweisungen geben kann, dass ein Reststück (Brett kann nicht in einem Sägevorgang aufgesägt werden) auf ein Rücktransportband gelegt wird.

Die Erfindung beschränkt sich in ihrer Ausführung nicht auf die vorstehend angegebenen bevorzugten Ausführungsbeispiele. Vielmehr ist eine Anzahl von Varianten denkbar, die von der erfindungsgemäßen Sägeguthandhabungsvorrichtung auch bei grundsätzlich anders gearteten Ausführungen Gebrauch machen.

## Patentansprüche

1. Sägeguthandhabungsvorrichtung, insbesondere zur Beschickung einer Vielblattkreissäge, mit mindestens einem Roboter zur automatischen räumlichen Ausrichtung mindestens eines Sägegutes, insbesondere von Brettware, auf eine Sägevorrichtung,
**dadurch gekennzeichnet,**
**dass** durch den mindestens einen Roboter automatisch die Nulllinie des Sägeguts bereits auf einem Rohholzstapel ermittelbar ist.

2. Sägeguthandhabungsvorrichtung nach Anspruch 1, **dadurch gekennzeichnet, dass** die Nulllinie des mindestens einen Sägegutes automatisch auf die Nulllinie eines Kreissägeblattes ausrichtbar ist.

3. Sägeguthandhabungsvorrichtung nach Anspruch 1 oder 2, **gekennzeichnet durch** Mittel zur automatischen Erfassung einer räumlichen Krümmung und / oder Unebenheiten mindestens eines Sägegutes.

4. Sägeguthandhabungsvorrichtung nach Anspruch 3, **dadurch gekennzeichnet, dass** das Mittel zur automatischen Erfassung einer räumlichen Krümmung des mindestens einen Sägegut eine Vorrichtung zur Entfernungsmessung und / oder eine Lichtschranke aufweist.

5. Sägeguthandhabungsvorrichtung nach Anspruch 4, **dadurch gekennzeichnet, dass** die Vorrichtung zur Entfernungsmessung mindestens eine Laserentfemungsmessvorrichtung und / oder eine Lichtschranke aufweist.

6. Sägeguthandhabungsvorrichtung nach Anspruch 5, **dadurch gekennzeichnet, dass** mit der Laserentfernungsrnessvorrichtung eine horizontale und / oder vertikale Entfernung zu einer Kante des Sägeguts messbar sind.

7. Sägeguthandhabungsvorrichtung nach mindestens einem der Ansprüche 3 bis 6 **dadurch gekennzeichnet, dass** mehr als zwei Vorrichtungen zur Entfernungsmessung eine Waldkante des Sägegutes abtasten.

8. Sägeguthandhabungsvorrichtung nach mindestens einem der Ansprüche 4 bis 7, **dadurch gekennzeichnet, dass** mindestens eine Vorrichtung zur Entfemungsmessung mindestens eine Kamera und/oder mindestens einen Laserscanner aufweist.

9. Sägeguthandhabungsvorrichtung nach Anspruch 8, **dadurch gekennzeichnet, dass** die Kamera und/oder der Scanner in Bezug auf des Sägegut verstellbar, insbesondere automatisch verstellbar, über dem Sägegut angeordnet ist

10. Sägeguthandhabungsvorrichtung nach Anspruch 8 oder 9, **dadurch gekennzeichnet, dass** die Brettkrümmung und/oder die Nulllinie des Sägegutes mit einer Datenverarbeitungsvorrichtung berechnet werden, die mit der Kamera gekoppelt.

11. Sägeguthandhabungsvorrichtung nach mindestens einem der Ansprüche 8 bis 10, **dadurch gekennzeichnet, dass** der Laserscanner derart angeordnet ist, dass dessen Lichtlinien quer zur Längserstreckungsrichtung des Sägegutes verlaufen.

12. Sägeguthandhabungsvorrichtung nach Anspruch 11, **dadurch gekennzeichnet, dass** die Berechnung der Brettkrümmung und/oder der Nulllinie des Sägegutes nach Abtastung der Lichtlinien durch die Kamera erfolgt.

13. Sägeguthandhabungsvorrichtung nach mindestens einem der Ansprüche 10 bis 12, **dadurch gekennzeichnet, dass** die in der Datenverarbeitungsvorrichtung berechneten Daten in einem Speicher abrufbar abgelegt werden.

14. Sägeguthandhabungsvorrichtung nach mindestens einem der vorhergehenden Ansprüche, **gekennzeichnet durch** ein Ausrichtungsmittel, mit dem mindestens ein Sägegut in Abhängigkeit von einer gemessenen Krümmung des Sägegutes auf die Nulllinie eines Sägeblattes ausgerichtet wird.

15. Sägeguthandhabungsvorrichtung nach mindestens einem der vorhergehenden Ansprüche, **dadurch gekennzeichnet, dass** die automatische Ausrichtung des mindestens einen Sägegutes auf ein Sägeblatt so erfolgt, dass ein minimaler Sägeabfall erzeugt wird.

16. Sägeguthandhabungsvorrichtung nach mindestens einem der vorhergehenden Ansprüche, **dadurch gekennzeichnet, dass** ein Roboter mit einem Greifer zur automatisch gesteuerten Bewegung, insbesondere Ausrichtung auf die Sägevorrichtung des mindestens einen Sägegutes verwendet wird.

17. Sägeguthandhabungsvorrichtung nach mindestens einem der Ansprüche 13 bis 16, **dadurch gekennzeichnet, dass** der Roboter in Abhängigkeit von den im Speicher hinterlegten Daten den Greifer positioniert.

18. Sägeguthandhabungsvorrichtung nach mindestens einem der vorhergehenden Ansprüche, **dadurch gekennzeichnet, dass** das mindestens eine Sägegut durch Vakuumsauger gehalten, transportiert und / oder ausgerichtet werden.

19. Sägeguthandhabungsvorrichtung nach mindestens einem der vorhergehenden Ansprüche, **dadurch gekennzeichnet, dass** nach der Sägevorrichtung ein zweiter Roboter angeordnet ist, der das gesägte Material in Abhängigkeit eines vorgegeben Kriteriums, insbesondere der Breite, sortiert.

20. Sägeguthandhabungsvorrichtung nach mindestens einem der vorhergehenden Ansprüche, **dadurch gekennzeichnet, dass** der erste und / oder der zweite Roboter ein Mittel zur Sprachsteuerung aufweist.

## Claims

1. Handling apparatus for items to be sawn, in particular for feeding a multiple blade circular saw, having at least one robot for automatic three-dimensional alignment of at least one item to be sawn, in particular a board, with respect to a sawing apparatus,
**characterized**
**in that** the zero line of the item to be sawn can be determined automatically even in an unprocessed wood stack by means of the at least one robot.

2. Handling apparatus for items to be sawn according to Claim 1, **characterized in that** the zero line of the at least one item to be sawn can be aligned automatically with the zero line of a circular saw blade.

3. Handling apparatus for items to be sawn according to Claim 1 or 2, **characterized by** means for automatic detection of three-dimensional curvature and/or unevennesses of at least one item to be sawn.

4. Handling apparatus for items to be sawn according to Claim 3, **characterized in that** the means for automatic detection of three-dimensional curvature of the at least one item to be sawn has an apparatus for distance measurement and/or a light barrier.

5. Handling apparatus for items to be sawn according to Claim 4, **characterized in that** the apparatus for distance measurement has at least one laser rangefinder and/or one light barrier.

6. Handling apparatus for items to be sawn according to Claim 5, **characterized in that** the laser rangefinder can be used to measure a horizontal and/or vertical distance to one edge of the item to be sawn.

7. Handling apparatus for items to be sawn according to at least one of Claims 3 to 6, **characterized in that** more than two apparatuses for distance measurement scan a timber edge of the item to be sawn.

8. Handling apparatus for items to be sawn according to at least one of Claims 4 to 7, **characterized in that** at least one apparatus for distance measurement has at least one camera and/or at least one laser scanner.

9. Handling apparatus for items to be sawn according to Claim 8, **characterized in that** the camera and/or the scanner are/is arranged above the item to be sawn such that they or it can be moved, in particular automatically, with respect to the item to be sawn.

10. Handling apparatus for items to be sawn according to Claim 8 or 9, **characterized in that** the board curvature and/or the zero line of the item to be sawn are/is calculated by a data processing apparatus which is coupled to the camera.

11. Handling apparatus for items to be sawn according to at least one of Claims 8 to 10, **characterized in that** the laser scanner is arranged such that its light lines run transversely with respect to the longitudinal extent direction of the item to be sawn.

12. Handling apparatus for items to be sawn according to Claim 11, **characterized in that** the board curvature and/or the zero line of the item to be sawn are/is calculated after scanning the light lines by means of the camera.

13. Handling apparatus for items to be sawn according to at least one of Claims 10 to 12, **characterized in that** the data which is calculated in the data processing apparatus is stored in a memory such that it can be called up.

14. Handling apparatus for items to be sawn according to at least one of the preceding claims, **characterized by** an alignment means, using which at least one item to be sawn is aligned with respect to the zero line of a saw blade as a function of a measured curvature of the item to be sawn.

15. Handling apparatus for items to be sawn according to at least one of the preceding claims, **characterized in that** the at least one item to be sawn is aligned automatically with respect to a saw blade so as to produce minimum sawing residue.

16. Handling apparatus for items to be sawn according to at least one of the preceding claims, **characterized in that** a robot having a gripper is used for automatically controlled movement, in particular alignment with respect to the sawing apparatus of the at least one item to be sawn.

17. Handling apparatus for items to be sawn according to at least one of Claims 13 to 16, **characterized in that** the robot positions the gripper as a function of the data which is stored in the memory.

18. Handling apparatus for items to be sawn according to at least one of the preceding claims, **characterized in that** the at least one item to be sawn is held, transported and/or aligned by means of a vacuum sucker.

19. Handling apparatus for items to be sawn according to at least one of the preceding claims, **characterized in that** a second robot is arranged after the sawing apparatus and sorts the sawn material as a function of a predetermined criterion, in particular the width.

20. Handling apparatus for items to be sawn according to at least one of the preceding claims, **characterized in that** the first and/or the second robot has/have a means for speech control.

## Revendications

1. Dispositif de manipulation d'articles de sciage, notamment pour le chargement d'une scie circulaire à lames multiples, comportant au moins un robot pour l'alignement spatial automatique d'au moins un article de sciage, notamment une planche, sur un dispositif de sciage, **caractérisé en ce**
**que** la ligne neutre de l'article de sciage peut être déjà déterminée de façon automatique sur un empilage de bois brut, au moyen d'un robot.

2. Dispositif de manipulation d'articles de sciage selon la revendication 1, **caractérisé en ce que** la ligne neutre d'au moins un article formé par sciage peut être alignée automatiquement sur la ligne neutre d'une lame de scie circulaire.

3. Dispositif de manipulation d'articles de sciage selon la revendication 1 ou 2, **caractérisé par** des moyens pour détecter de façon automatique un cintrage spatial et/ou des inégalités d'au moins un article de sciage.

4. Dispositif de manipulation d'articles de sciage selon la revendication 3, **caractérisé en ce que** le moyen pour la détection automatique d'une courbure spatiale du au moins un article de sciage possède un dispositif de mesure de distance et/ou une cellule photoélectrique.

5. Dispositif de manipulation d'articles de sciage selon la revendication 4, **caractérisé en ce que** le dispositif de mesure de distance comporte un dispositif de mesure de distance à laser et/ou une cellule photoélectrique.

6. Dispositif de manipulation d'articles de sciage selon la revendication 5, **caractérisé en ce qu'**avec le dispositif de mesure de distance à laser on peut mesurer une distance horizontale et/ou verticale par rapport à un bord de l'article de sciage.

7. Dispositif de manipulation d'articles de sciage selon au moins l'une des revendications 3 à 6, **caractérisé en ce que** plus de deux dispositifs pour la mesure de distance jaugent un côté flacheux d'articles de sciage.

8. Dispositif de manipulation d'articles de sciage selon au moins l'une des revendications 4 à 7, **caractérisé en ce qu'**au moins un dispositif pour la mesure de distance comporte au moins un appareil de prise de vues et/ou au moins un scanner à laser.

9. Dispositif de manipulation d'articles de sciage selon la revendication 8, **caractérisé en ce que** l'appareil de prise de vues et/ou le scanner est disposé de manière à être réglable, notamment de façon automatique, par rapport à l'article de sciage.

10. Dispositif de manipulation d'articles de sciage selon la revendication 8 ou 9, **caractérisé en ce que** la courbure des planches et/ou la ligne neutre de l'article de sciage sont calculées avec un dispositif de traitement de données, qui est couplé à l'appareil de prise de vues.

11. Dispositif de manipulation d'articles de sciage selon au moins l'une des revendications 8 à 10, **caractérisé en ce que** le scanner à laser est disposé de telle sorte que ses rayons lumineux s'étendent transversalement par rapport à la direction d'extension longitudinale de l'article de sciage.

12. Dispositif de manipulation d'articles de sciage selon la revendication 1, **caractérisé en ce que** le calcul de la courbure de la planche et/ou de la ligne neutre de l'article de sciage est réalisé après exploration des rayons lumineux par l'appareil de prise de vues.

13. Dispositif de manipulation d'articles de sciage selon au moins l'une des revendications 10 à 12, **caractérisé en ce que** les données calculées dans le dispositif de traitement de données sont mémorisées, de manière à pouvoir être appelées, dans une mémoire.

14. Dispositif de manipulation d'articles de sciage selon au moins l'une des revendications précédentes, **caractérisé par** un moyen d'alignement, avec lequel au moins un article de sciage est aligné sur la ligne neutre de la lame de scie, en fonction d'une courbure mesurée de l'article de sciage.

15. Dispositif de manipulation d'articles de sciage selon au moins l'une des revendications précédentes, **caractérisé en ce que** l'alignement automatique du au moins un article de sciage sur une lame de scie s'effectue de manière à obtenir une chute de sciage minimale.

16. Dispositif de manipulation d'articles de sciage selon au moins l'une des revendications précédentes, **caractérisé en ce qu'**on utilise un robot comportant un organe de préhension pour le déplacement commandé de façon automatique, notamment pour l'alignement du au moins un article de sciage sur le dispositif de sciage.

17. Dispositif de manipulation d'articles de sciage selon au moins l'une des revendications 13 à 16, **caractérisé en ce que** le robot positionne l'organe de préhension en fonction des données mémorisées dans une mémoire.

18. Dispositif de manipulation d'articles de sciage selon au moins l'une des revendications précédentes, **caractérisé en ce que** le au moins un article de sciage est retenu, transporté et/ou orienté par un système d'aspiration à dépression.

19. Dispositif de manipulation d'articles de sciage selon au moins l'une des revendications précédentes, **caractérisé en ce qu'**en aval du dispositif de sciage est disposé un second robot, qui trie le matériau scié, en fonction d'un critère prédéterminé, notamment en fonction de la largeur.

20. Dispositif de manipulation d'articles de sciage selon au moins l'une des revendications précédentes, **caractérisé en ce que** le premier et/ou le second robots comportent un moyen de commande vocale.
